# FASCICULE DE BREVET EUROPEEN

(11) **EP 3 394 128 B1**
(45) Date de publication et mention de la délivrance du brevet: **14.07.2021**
(21) Numéro de dépôt: 16819993.3
(22) Date de dépôt: 08.12.2016
(51) Int. Cl.: C08F 297/04, C08F 212/12, B60C 1/00

(54) **PROCÉDÉ DE SYNTHÈSE D'UN ÉLASTOMÈRE THERMOPLASTIQUE COMPRENANT AU MOINS UN BLOC POLY(ALPHA-MÉTHYLSTYRÈNE)**
VERFAHREN ZUR SYNTHESE EINES THERMOPLASTISCHEN ELASTOMERS MIT MINDESTENS EINEM POLY(ALPHA-METHYLSTYROL)BLOCK
METHOD FOR SYNTHESIZING A THERMOPLASTIC ELASTOMER COMPRISING AT LEAST ONE POLY(ALPHA-METHYLSTYRENE) BLOCK

(30) Priorité: 21.12.2015 FR 1562986
(43) Date de publication de la demande: 31.10.2018
(73) Titulaire: Compagnie Générale des Etablissements Michelin, 63000 Clermont-Ferrand (FR)
(72) Inventeur: MATMOUR, Rachid, 63040 Clermont-ferrand Cedex 9 (FR); NGO, Robert, 63040 Clermont-Ferrand Cedex 9 (FR)
(74) Mandataire: Le Cam, Véronique Marie Christine
(86) Numéro de dépôt international: PCT/FR2016/053275
(87) Numéro de publication internationale: WO 2017/109325

(56) Documents cités:
- EP-A1- 0 014 947
- EP-A2- 0 135 169
- WO-A1-2004/090001
- US-A- 4 461 874

## Description

La présente invention concerne un procédé de synthèse d'un copolymère à blocs de type élastomère thermoplastique, un au moins des blocs étant un élastomère diénique et un autre au moins des blocs est constitué de poly(α-méthylstyrène).

Les élastomères thermoplastiques (TPE) sont des élastomères qui sont d'un grand intérêt dans de nombreux domaines du fait de leurs propriétés combinées liées d'une part au bloc élastomérique et d'autre part au bloc rigide thermoplastique. Cette phase rigide se ramollit jusqu'à fondre pour des températures dépassant la température de transition vitreuse (Tg) ou la température de fusion (Tf) du bloc thermoplastique, et retrouve sa rigidité lorsque la température revient au niveau de la température ambiante. Cette particularité du TPE implique un potentiel d'application très large.

Parmi les élastomères thermoplastiques les plus répandus, on trouve les copolymères à blocs styréniques. Or, la température de transition vitreuse des blocs polystyrène est aux alentours de 80°C à 100°C selon la taille des blocs styréniques. Pour certaines applications, la valeur de la température de transition vitreuse des blocs polystyrène est insuffisante. En effet, cette valeur ne permet pas d'envisager l'utilisation de ces TPE pour la fabrication de certains objets soumis notamment à des conditions d'utilisation spécifiques où les températures dépassent les 100°C.

Il peut donc s'avérer nécessaire de remplacer les blocs rigides polystyrène par des blocs rigides ayant une température de transition vitreuse supérieure à 100°C. Une solution envisagée dans l'état de l'art, est de substituer le polystyrène par du poly-(α)-méthylstyrène dont la température de transition vitreuse est aux alentours de 168°C.

Plusieurs voies de synthèse peuvent permettre de polymériser l'a-méthylstyrène comme la polymérisation cationique, radicalaire et anionique. Néanmoins, quelle que soit la voie abordée, la polymérisation de l'α-méthylstyrène est toujours limitée par un équilibre réactionnel dépendant à la fois de la température plafond de polymérisation et de la concentration en α- méthylstyrène.

Par le passé, la littérature a décrit de nombreuses synthèses de TPE à blocs thermoplastiques à base d'a-méthylstyrène dans le but d'améliorer la tenue thermique de TPE styrénique.

WO2007112232A2 décrit la synthèse d'un TPE à base d'a-méthylstyrène en trois étapes. La première étape consiste en la polymérisation anionique de l'a-méthylstyrène en milieu concentré en présence de styrène, à haute température (70°C) et en présence d'éther diéthylique dans un premier réacteur. L'ajout continu de styrène, à un débit maîtrisé, lors de la polymérisation dans le premier réacteur permet d'avoir une répartition statistique des motifs styrène/α-méthylstyrène et d'atteindre des taux de conversion de 97% pour l'a-méthylstyrène et de 100% pour le styrène. Dans le second réacteur, la polymérisation du butadiène est effectuée en présence des chaînes vivantes de poly(styrène-co-α-méthylstyrène). La troisième étape consiste en la terminaison de la polymérisation par réaction avec un agent de couplage alkoxysilane permettant de générer le copolymère triblocs.

D'autres documents, tels que WO8505116, EP0014947 A1 et EP0135169A2, décrivent la synthèse d'élastomères thermoplastiques à base d'a-méthylstyrène. Afin d'atteindre un taux de conversion élevé en α-méthylstyrène, ce dernier est copolymérisé avec le styrène par voie anionique pour générer le bloc thermoplastique. Pour obtenir le copolymère triblocs de type poly(α-méthylstyrène-co-styrène)-polydiène-poly(α-méthylstyrène-co-styrène), la synthèse est réalisée en présence d'un initiateur difonctionnel et à haute température (au-delà de 50°C). La copolymérisation de l'a-méthylstyrène et du styrène est initiée par une chaîne polybutadiényldilithium obtenue dans une étape précédente, et réalisée en présence d'a-méthylstyrène en une ou deux étapes par ajout ultérieur de styrène.

La contrepartie de ces méthodes qui privilégient un taux de conversion élevé de l'a-méthylstyrène en utilisant le styrène comme co-monomère, est que la Tg des blocs thermoplastiques, certes supérieure à celle d'un homopolymère de styrène, reste très inférieure à celle du poly-(α-méthylstyrène) et parfois au-dessous de certaines températures d'usage des matériaux à base d'un élastomère thermoplastique.

Dans le brevet US4302559, on s'intéresse à la synthèse de copolymère à blocs à base de butadiène et d'a-méthylstyrène. Lors de la première étape de polymérisation, l'a-méthylstyrène est polymérisé à 30°C pendant 30min en présence de THF, mais n'est pas totalement converti. Dans un deuxième temps, une partie du butadiène est ajouté et polymérisé à 30°C pendant 30min afin d'obtenir un bout de chaîne polybutadiényllithium pour éviter la dépolymérisation de l'a-méthylstyrène. L'ajout de tert-amylate de potassium et l'autre partie du butadiène, dans une troisième étape, permet d'insérer l'a-méthylstyrène résiduel de manière statistique. La conversion en α-méthylstyrène peut atteindre 80%. Afin d'obtenir un copolymère à blocs avec des blocs latéraux poly(α-méthylstyrène), le polymère est couplé à l'aide du tétrachlorure de silicone. Il convient de noter que le polymère obtenu n'est pas un copolymère triblocs à proprement parlé. En effet, le bloc central polydiène est lui-même, constitué de trois blocs formant polybutadiène-poly(butadiène-co-α-méthylstyrène)-polybutadiène.

La contrepartie de cette méthode est que l'on n'aboutit pas à un élastomère thermoplastique parfaitement triblocs poly(α-méthylstyrène)-polydiène-poly(α-méthylstyrène) et dont les propriétés thermo-mécaniques ne sont pas aussi bonnes que celles de TPE parfaitement bien défini tel que poly(α-méthylstyrène)-polydiène-poly(α-méthylstyrène).

Les voies de polymérisation anionique pour former un bloc thermoplastique à base d'a-méthylstyrène d'un élastomère thermoplastique sont donc limitées par la nécessité de copolymériser ce monomère avec d'autres en vue d'atteindre des taux de conversion suffisants. En l'absence de ces co-monomères, le taux de conversion conduit à une productivité non-optimisée du procédé de synthèse. En outre, le monomère non converti doit être extrait et recyclé. Un tel traitement réalisé sur des volumes importants de monomère non converti rend ce type de procédé peu attractif du fait de son impact économique sur le coût du procédé. Par ailleurs, la présence du co-monomère a un impact sur les propriétés thermo-mécaniques de l'élastomère thermoplastique.

Il est connu de l'homme de l'art que l'ajout de produits, de réactifs ou de solvants en cours de procédé de polymérisation anionique est une source majeure d'apport d'impuretés notamment protiques dans le milieu réactionnel. La conséquence de cet apport est la terminaison prématurée de la polymérisation par réaction de ces impuretés protiques avec les chaînes de polymère vivant. Le risque augmente avec les volumes de substances ajoutées.

Ainsi une autre difficulté qui préoccupe de manière générale les concepteurs de copolymères à blocs par polymérisation anionique séquencée est l'ajout des réactifs et solvants nécessaires aux polymérisations successives utilisant les blocs vivants déjà formés par la ou les polymérisations précédentes comme macroamorceurs pour la propagation des polymérisations ultérieures, visant à former les autres blocs. En effet, pour obtenir un élastomère thermoplastique aux propriétés thermomécaniques satisfaisantes, il convient d'éviter une composition hétéroclite d'espèces générées telles que des homopolymères, des copolymères diblocs voire des triblocs, de longueur plus ou moins homogène, due à une terminaison prématurée ou non contrôlée de la polymérisation. Un tel hétéroclisme présente un impact significatif sur les propriétés thermo-mécaniques de l'élastomère thermoplastique. Cette difficulté est augmentée lorsque le nombre de polymérisations successives augmente ou encore avec la polyfonctionnalité des macroamorceurs.

A cette difficulté s'ajoute le risque de formations de mélanges d'espèces polymère dues à la difficulté d'un amorçage homogène sur les premiers blocs vivant avant la propagation de la polymérisation visant à former les deuxièmes blocs. Cette difficulté est augmentée lorsque le premier bloc vivant comporte deux sites actifs ou plus et lorsque le milieu réactionnel est de viscosité élevée.

L'homogénéité d'amorçage et de croissance de chaîne peut être appréciée par la distribution des masses moléculaires en nombre. Celle-ci doit être étroite pour garantir des propriétés thermo-mécaniques satisfaisantes du copolymère à bloc tel que l'élastomère thermoplastique.

Au vu des procédés de synthèse de l'art antérieur, le but de la présente invention est de proposer un procédé de synthèse économiquement intéressant d'un élastomère thermoplastique à blocs dont le ou les blocs thermoplastiques sont des poly(α-méthylstyrène), présentant en outre une productivité accrue, notamment en permettant d'atteindre un taux de conversion de l' α-méthylstyrène élevé. Ce procédé doit permettre de fournir des élastomères thermoplastiques avec une polydispersité faible et de composition structurelle contrôlée, dont les blocs thermoplastiques ont une température de transition vitreuse élevée, supérieure à certaines températures de travail de matériaux à base de tels élastomères.

Dans l'état de l'art, l'amorçage et la propagation de la polymérisation du monomère styrénique en vue de synthétiser un élastomère thermoplastique peuvent être réalisés à partir d'un élastomère vivant à une température plafond inférieure à celle de l'α-méthylstyrène, mais toujours positive, et dans le même solvant que la polymérisation du diène, à savoir un solvant apolaire aprotique.

Les inventeurs ont su mettre en évidence contre toute attente que la polymérisation anionique de l'a-méthylstyrène sur un polydiène vivant pouvait se faire de manière homogène à une température inférieure à 0°C et en présence d'un co-solvant polaire aprotique, tout en atteignant un taux de conversion élevé de l'a-méthylstyrène, notamment supérieur à 80%. Le fait que les sites carbone-lithium, dont sont pourvues les chaînes polydiène vivantes, sont équi-réactifs lors de la polymérisation ultérieure de l'a-méthylstyrène, et que la propagation de celle-ci est homogène est d'autant plus inattendu que la viscosité du milieu est élevée surtout à des températures aussi basses.

Ainsi, de manière surprenante, le procédé de l'invention permet de synthétiser un élastomère thermoplastique de microstructure et macrostructure contrôlées avec une distribution des masses moléculaires étroite, notamment avec un indice de polydispersité souvent très inférieur à 2, voire inférieur à 1,3, ce qui est révélateur d'une part d'une polymérisation homogène de l'a-méthylstyrène, et d'autre part d'un contrôle des espèces copolymères triblocs générées. Par ailleurs, le ou les blocs thermoplastiques sont des homopolymères de l'a-méthylstyrène et peuvent donc présenter une température de transition vitreuse supérieure à la température de transition vitreuse du polystyrène. Le procédé de l'invention permet de synthétiser un élastomère thermoplastique à blocs poly(α-méthylstyrène) avec une productivité accrue, économiquement compatible avec une exploitation industrielle.

La demande de brevet FR2852960A1 décrit une homopolymérisation de l'α-méthylstyrène par polymérisation anionique à une concentration élevée, à basse température et en présence d'un initiateur monofonctionnel et d'une quantité importante de co-solvant polaire avec un rapport volumique au co-solvant apolaire de 18%. Dans ces conditions, la conversion du monomère est supérieure à 90%. Dans ces conditions, le procédé permet par ailleurs de contrôler la masse molaire ainsi que l'indice de polydispersité du poly(α-méthylstyrène). Toutefois, il convient de noter que dans le cadre de cette demande, il s'agit d'homopolymérisation avec une initiation au moyen d'un initiateur de très faible masse moléculaire et de fonctionnalité unique. En outre, dans le cadre de ce procédé, il n'est pas fait mention, ou même suggéré, d'une adaptabilité du procédé à la copolymérisation et qui plus est à la copolymérisation fragmentée, en vue de fabriquer des blocs, et aux difficultés qui y sont liées.

Ainsi, le but de la présente invention et d'autres sont atteints par un procédé de synthèse d'un élastomère thermoplastique de type copolymère à blocs dont au moins un des blocs est un élastomère diénique et au moins un autre bloc est un homopolymère poly(α-méthylstyrène), qui consiste à polymériser de l'a-méthylstyrène à partir de chaînes anioniques « vivantes » de polymères diéniques à une température inférieure à 0°C et en présence d'un co-solvant polaire aprotique.

L'invention a donc pour objet ce procédé de synthèse d'un élastomère thermoplastique comprenant les étapes suivantes:
1. la polymérisation d'au moins un monomère diénique dans un milieu réactionnel de départ comprenant un initiateur de polymérisation anionique et un solvant apolaire aprotique;
2. la polymérisation de l'a-méthylstyrène sur la chaîne polydiénique vivante obtenue à l'étape précédente comprenant:
   a. à l'issue de la polymérisation de l'au moins un monomère diénique, le maintien à une température positive, inférieure à la température plafond de la polymérisation de l'a-méthylstyrène, du milieu réactionnel contenant l'élastomère diénique vivant obtenu précédemment et l'a-méthylstyrène;
   b. le refroidissement du milieu réactionnel contenant le polydiène vivant obtenu précédemment, à une température inférieure à 0°C;
   c. simultanément, successivement ou préalablement à l'étape de refroidissement, l'ajout au milieu réactionnel d'un solvant polaire aprotique avec un rapport volumique du solvant polaire au solvant apolaire inférieur à 1; et
   d. la propagation de la polymérisation de l'a-méthylstyrène sur la chaîne polydiénique vivante;
3. la terminaison de la polymérisation et la récupération du polymère thermoplastique.

Un copolymère thermoplastique à blocs obtenu par un tel procédé peut être utilisé dans une composition de caoutchouc.

Une telle composition peut être incorporée dans une enveloppe de pneumatique.

Dans la description, on entend par "amorçage" en rapport avec la polymérisation de l'α-méthylstyrène la formation de nouveaux centres actifs α-méthylstyrényl sur les extrémités actives des chaînes élastomères vivantes.

Dans la description, les expressions "amorceur" et "initiateur" sont utilisées indifféremment pour avoir la même signification. Il en est de même pour les expressions "amorçage" et "initiation ".

Dans la description, les expressions "élastomère diénique" et "polydiène" sont utilisées indifféremment pour avoir la même signification.

Dans la description, on entend par "Indice de polydispersité" ou "IP", le rapport de la masse moléculaire moyenne en poids à la masse moléculaire moyenne en nombre de l'élastomère thermoplastique. Plus la valeur de l'IP est proche de 1, plus la distribution des masses moléculaires est étroite.

Dans la description, le terme "vivant" est utilisé afin de qualifier la capacité des extrémités des chaînes des polymères, de maintenir leur réactivité suffisamment longtemps pour permettre la polymérisation sans terminaison et réactions de transfert.

Dans la description, on entend par "température ambiante", une température variant entre 20°C et 30°C.

Dans la description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Dans le cadre de l'invention, les produits carbonés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse.

La première étape du procédé selon l'invention consiste en la polymérisation d'au moins un monomère diénique dans un milieu réactionnel de départ comprenant un initiateur de polymérisation anionique et un solvant apolaire aprotique. Cette étape permet de fabriquer un polymère diénique vivant, c'est-à-dire des chaînes vivantes présentant une ou plusieurs extrémités actives sous forme d'un carbanion.

La polymérisation du monomère diénique peut être effectuée de manière connue en continu ou en discontinu. On effectue généralement la polymérisation à une température comprise entre 20°C et 120°C et de préférence allant de 30°C à 90°C.

Le monomère diénique selon l'invention peut être choisi parmi les monomères diènes conjugués ayant de 4 à 12 atomes de carbone. A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. Préférentiellement le monomère diénique est le butadiène-1,3 ou le 2-méthyl-1,3-butadiène.

Selon des variantes de l'invention, le monomère diénique peut être copolymérisé avec au moins un deuxième monomère différent du premier monomère et choisi parmi les monomères pouvant être polymérisé par polymérisation anionique. On peut notamment citer les diènes conjugués, les diènes non conjugués, les monomères vinylique, les monomères vinyliques aromatiques.

Les monomères vinyliques aromatiques selon l'invention peuvent être choisis parmi les monomères vinyles aromatiques ayant de 8 à 20 atomes de carbone, comme par exemple le styrène, l'ortho-, méta-, para-méthylstyrène, le mélange commercial vinylmésitylène, le divinylbenzène et le vinylnaphtalène.

A titre préférentiel, lorsque le monomère diénique est copolymérisé avec au moins un deuxième monomère différent du premier monomère et choisi parmi les diènes conjugués, celui-ci est le butadiène-1,3 ou le 2-méthyl-1,3-butadiène.

A titre préférentiel, lorsque le monomère diénique est copolymérisé avec au moins un deuxième monomère différent du premier monomère et choisi parmi les monomères vinyliques aromatiques, celui-ci est le styrène.

Outre le monomère diénique et éventuellement au moins un autre monomère, le milieu réactionnel de départ comprend un solvant aprotique apolaire.

Par solvant aprotique apolaire, on entend selon l'invention un solvant hydrocarboné inerte qui peut être par exemple un hydrocarbure aliphatique ou alicyclique comme le pentane, l'hexane, l'heptane, l'iso-octane, le cyclohexane, le méthylcyclohexane, ou un hydrocarbure aromatique comme le benzène, le toluène, le xylène, ou les mélanges de ces solvants.

Outre le monomère diénique et éventuellement au moins un autre monomère, ainsi que le solvant aprotique apolaire, le milieu réactionnel de départ comprend également un initiateur de polymérisation anionique.

L'initiateur de polymérisation selon l'invention permet d'amorcer la polymérisation anionique de monomères diènes pour préparer les élastomères diéniques vivants. En tant qu'initiateur de polymérisation, on peut utiliser tout initiateur anionique monofonctionnel ou polyfonctionnel connu, c'est-à-dire possédant un ou plusieurs centres actifs. On peut citer ceux contenant un métal alcalin tel que le lithium, le sodium ou le potassium. Toutefois un initiateur contenant du lithium est utilisé à titre préférentiel. Comme initiateurs organolithiens conviennent notamment ceux comportant une ou plusieurs liaisons carbone-lithium. Des composés représentatifs sont les organolithiens aliphatiques ou aromatiques tels que l'éthyllithium, le n-butyllithium (n BuLi), l'isobutyllithium, les alkyldilithium tels que le 1,4-dilithiobutane, le 1,4-dilithiotétraphénylbutane ou encore les initiateurs dilithiés issus de la réaction du s-butyllithium sur les dialcénylbenzenes tels que décrits dans le brevet EP1237941 B1. Parmi ces derniers, l'adduit de réaction résultant d'une molécule de s-butyl lithium sur chacune des deux doubles liaisons portées par le 1,3-diisopropénylbenzene, soit le 1,3-diisopropylbenzène dilithium, est préféré. Comme initiateurs organolithiens conviennent également ceux comportant une ou plusieurs liaisons azote-lithium. Parmi ceux-ci, on peut citer les amidures de lithium obtenus à partir d'une amine secondaire cyclique, notamment la pyrrolidine et l'hexaméthylèneimine.

Les élastomères diéniques vivants peuvent avoir toute microstructure qui est fonction des conditions de polymérisation utilisées, notamment de la présence ou non d'un agent modifiant et/ou randomisant dans le milieu réactionnel et des quantités d'agent modifiant et/ou randomisant employées. Les élastomères diéniques peuvent être par exemple à blocs, statistiques, séquencés, microséquencés.

Les élastomères diéniques vivants peuvent être linéaires ou étoilés; ils peuvent avoir une ou plusieurs extrémités actives sous forme de liaisons carbone-lithium. De préférence, l'élastomère diénique vivant est linéaire, préférentiellement encore ses deux extrémités de chaîne sont actives.

Selon des variantes avantageuses de l'invention, l'une au moins des caractéristiques suivantes est observées pour la première étape du procédé, et de préférence toutes :
- le monomère diénique est le butadiène,
- le cas échéant, le co-monomère est le styrène et
- l'initiateur de polymérisation anionique comporte deux liaisons carbone-lithium, et est de préférence le 1,3-diisopropénylbenzyllithium.

Selon le procédé de l'invention, l'étape suivante consiste en la polymérisation de l'α-méthylstyrène sur l'élastomère diénique vivant obtenu précédemment.

Selon certaines variantes de l'invention, l'α-méthylstyrène est présent dans le milieu réactionnel de départ.

Selon d'autres variantes de l'invention, l'α-méthylstyrène est ajouté dans le milieu réactionnel à l'issue de l'étape de polymérisation d'au moins un monomère diénique. Dans ce cas l'α-méthylstyrène ajouté est purifié de manière classique afin de ne pas introduire d'impuretés dans le milieu réactionnel qui pourraient réagir avec les chaînes vivantes et créer des chaînes mortes. Ces variantes sont particulièrement avantageuses, car il ne peut y avoir d'interaction possible de l'α-méthylstyrène avec les chaînes diéniques vivantes pendant la polymérisation du monomère diène. Préférentiellement, on utilisera un organolithien aliphatique, plus particulièrement le n-butyllithium (n BuLi), pour neutraliser les impuretés le l'α-méthylstyrène ajouté.

A l'issue de l'étape de polymérisation d'au moins un monomère diénique, le milieu réactionnel contenant l'élastomère diénique vivant est maintenu à une température inférieure à la température plafond l'α-méthylstyrène en présence de l'a-méthylstyrène pendant une durée suffisante pour amorcer de manière homogène sur les centres actifs de l'élastomère diénique vivant, la polymérisation de l'a-méthylstyrène.

Avantageusement, le milieu réactionnel est maintenu à température ambiante.

Le milieu réactionnel peut être maintenu à une température abaissée, avantageusement à température ambiante, pendant une durée variant de 1 minute, de préférence de 15 minutes, plus particulièrement de 1 heure, à 4 heures, plus particulièrement à 3 heures. L'amorçage de la polymérisation de l'a-méthylstyrène s'accompagne généralement d'une modification de la coloration du milieu réactionnel; ce qui permet à l'homme du métier de déterminer le temps nécessaire à cette étape.

Au bout de ce lapse de temps de mise en contact de l'élastomère diénique vivant et de l'α-méthylstyrène, le milieu réactionnel obtenu précédemment est refroidi à une température inférieure à 0°C. De préférence, le milieu réactionnel est refroidi à une température supérieure ou égale à -50°C, préférentiellement supérieure ou égale à - 40°C, et inférieure ou égale à -10°C, préférentiellement inférieure ou égale -20°C.

Simultanément ou séquentiellement à cette étape de refroidissement, un solvant aprotique polaire est ajouté au milieu réactionnel dans une quantité en volume inférieure à celle du solvant aprotique apolaire. Le rapport volumique du solvant polaire au solvant apolaire est donc inférieur à 1. De préférence, ce rapport volumique du solvant polaire au solvant apolaire est inférieur ou égal à 1/3. La quantité de solvant polaire est préférentiellement au moins de 10% en volume par rapport au volume total de solvant.

Par solvant aprotique polaire, on entend selon l'invention un solvant inerte qui possède un moment dipolaire, sans atome d'hydrogène acide. Par ailleurs, ce solvant polaire doit être miscible avec le solvant apolaire utilisé pour l'étape de polymérisation du monomère diénique, à la température du milieu réactionnel dans lequel il est présent.

A titre de solvant aprotique polaire selon l'invention, on peut citer par exemple les thioéthers, les éthers, notamment les éthers cycliques parmi lesquels le tétrahydrofurane (THF), le tétrahydropyranne.

Selon des variantes de l'invention, lorsque le solvant aprotique polaire est ajouté au milieu réactionnel séquentiellement à l'étape de refroidissement, l'ajout est effectué avant l'étape de refroidissement du milieu réactionnel à une température inférieur à 0°C.

Selon d'autres variantes de l'invention, lorsque le solvant aprotique polaire est ajouté au milieu réactionnel séquentiellement à l'étape de refroidissement, l'ajout est effectué après l'étape de refroidissement du milieu réactionnel à une température inférieur à 0°C.

Le milieu réactionnel est maintenu à température refroidie pendant une durée suffisante pour que la propagation de la polymérisation de l'α-méthylstyrène s'effectue à partir des chaînes diéniques vivantes amorcées. Cette durée est aisément accessible à un homme du métier et peut être par exemple d'au moins 4 heures.

Selon le procédé de l'invention, le taux de conversion de l'α-méthylstyrène peut atteindre au moins 80%, voire au moins 90%.

L'homme du métier comprendra qu'un intérêt du procédé de l'invention réside dans la possibilité d'atteindre un taux de conversion élevé de l'α-méthylstyrène lorsqu'on forme des blocs d'homopoly(α-méthylstyrène) en vue d'augmenter la température de transition vitreuse des blocs thermoplastiques d'un élastomère thermoplastique.

Il est connu de l'homme du métier que la polymérisation anionique est une polymérisation sensible à toute présence protique. L'extrême sensibilité des centres actifs portés par les chaînes polymères aux impuretés électrophiles impose une purification poussée de tous les constituants du milieu réactionnel avant leur utilisation dans le procédé. Ainsi qu'il s'agisse des monomères ou des solvants, voire d'autres composés utilisés lors de la polymérisation, tels qu'agents randomisant.., ceux-ci subissent une purification par des méthodes classiques et connues de l'homme du métier. On peut citer pour toutes les solutions, de monomères notamment, une neutralisation des impuretés préalablement à leur utilisation par réaction avec un composé organolithien tel que le n-butyllithium. Les solvants sont quant à eux anhydres et peuvent également être purifiés par distillation.

A ce stade, le procédé selon l'invention peut être poursuivi de manière connue en soi par la terminaison de la polymérisation de l'a-méthylstyrène et la récupération du polymère thermoplastique.

Selon des variantes de l'invention, la terminaison peut s'effectuée par l'ajout d'un agent stoppant classique, notamment d'un composé protique tel que de l'eau ou un alcool.

Selon d'autres variantes de l'invention, la terminaison peut être effectuée par modification du ou des bouts de chaîne du polymère thermoplastique obtenu au moyen d'un agent de fonctionnalisation, de couplage ou d'étoilage bien connu de l'homme du métier. La modification est alors réalisée selon des modes opératoires classiques.

Les variantes des différentes étapes du procédé de l'invention sont combinables entre elles dans la limite de leur compatibilité. De la même manière, les aspects particuliers ou préférentiels dans une même variante ou de variantes différentes sont combinables entre eux dans la mesure où ils sont compatibles.

Le procédé selon l'invention présente une productivité conciliable avec une production industrielle économiquement rentable, notamment en permettant d'atteindre un taux de conversion de l' α-méthylstyrène élevé d'au moins 80%, voire d'au moins 90%. Le procédé est en outre tout à fait reproductible.

Le polymère thermoplastique obtenu par ce procédé, est de composition homogène et contrôlée, c'est-à-dire que les chaînes du polymère ont des Mn proches les unes des autres. L'indice de polydispersité du polymère thermoplastique est contrôlé et réduit; il varie notamment de 1 à 1,5. Les blocs thermoplastiques du polymère, composés de poly(α-méthylstyrène), peuvent présenter une température de transition vitreuse élevée, supérieure à celle du polystyrène, notamment d'au moins 110°C, voire même autour de 170°C. Cette température de transition vitreuse est dépendante de la longueur des blocs thermoplastiques.

Selon des variantes de l'invention, le bloc élastomère de l'élastomère thermoplastique présente une masse moléculaire moyenne en nombre, Mn, d'au moins 50 000.

Selon des variantes de l'invention, le bloc élastomère de l'élastomère thermoplastique présente une température de transition vitreuse comprise entre 0°C et - 70°C et plus particulièrement entre - 10°C et - 60°C.

Selon des variantes de l'invention, le bloc élastomère de l'élastomère thermoplastique est exempt de toute unité α-méthylstyrène.

Selon des variantes de l'invention, le bloc poly(α-méthylstyrène) présente une masse moléculaire moyenne en nombre, Mn, d'au moins 5 000.

Selon des variantes de l'invention, le bloc poly(α-méthylstyrène) présente une température de transition vitreuse de plus de 100°C, de préférence d'au moins 110°C.

Ces variantes sont combinables entre elles.

L'élastomère thermoplastique préparé selon le procédé de l'invention peut, selon certaines variantes, être diblocs, composé d'un bloc élastomère et d'un bloc thermoplastique. C'est le cas notamment de polymères obtenus au moyen d'un initiateur de polymérisation possédant une seule liaison active. L'élastomère diénique vivant ne possède qu'un site actif en une seule extrémité de chaîne qui initie la polymérisation de l' α-méthylstyrène. Selon des mises en œuvre particulières de ces variantes, l'élastomère thermoplastique peut comporter à l'extrémité du bloc élastomère diénique, une fonction qui résulterait d'un initiateur de polymérisation possédant une seule liaison active comportant une telle fonction, tel un amidure de lithium par exemple.

Selon d'autres variantes de l'invention, l'élastomère thermoplastique obtenu peut être multiblocs, composé d'un bloc élastomère central et d'au moins deux blocs thermoplastiques. C'est le cas notamment de polymères obtenus au moyen d'un initiateur de polymérisation possédant plusieurs liaisons actives. L'élastomère diénique vivant possède alors au moins deux sites actifs, un à chaque extrémité de chaîne, qui initient la polymérisation de l' α-méthylstyrène. Selon ces variantes, le polymère thermoplastique est de préférence triblocs, composé d'un bloc élastomère central et de deux blocs thermoplastiques latéraux. Il peut résulter d'une initiation au moyen d'un initiateur de polymérisation difonctionnel, tel qu'un composé organolithium possédant deux liaisons carbone-lithium.

Selon d'autres variantes encore de l'invention, l'élastomère thermoplastique obtenu peut être multiblocs, composé d'au moins deux blocs élastomère et d'au moins un bloc thermoplastique. Ce type de polymères est obtenu principalement lorsque la terminaison de la polymérisation l'α-méthylstyrène est effectuée par l'ajout d'un agent de couplage ou d'étoilage, que la polymérisation soit initiée par un initiateur possédant une seule ou plusieurs liaisons actives.

Selon d'autres variantes encore de l'invention, le polymère thermoplastique obtenu peut être fonctionnalisé en extrémité de chaîne ou au sein de la chaîne, en fonction de la nature de l'agent qui apporte la fonction que ce soit l'initiateur de polymérisation ou encore l'agent de stoppage.

Ainsi, il faut comprendre que selon le type d'initiateur de polymérisation anionique utilisé et selon la terminaison de la polymérisation de l'α-méthylstyrène, le copolymère peut être fonctionnalisé ou non et être linéaire, étoilé ou former un réseau tridimensionnel comprenant au moins une séquence [polydiène - poly(α-méthylstyrène)].

Les copolymères diéniques thermoplastiques à blocs conformes à l'invention peuvent avantageusement être utilisés dans des compositions de caoutchouc thermoplastique pour la fabrication de certains objets soumis notamment à des conditions d'utilisation spécifiques où les températures dépassent les 100°C. On peut notamment penser à des applications aussi variées que les contenants remplis à chaud, les emballages stérilisables, les compositions adhésives, les pneumatiques, les revêtements routiers ou de toiture.

Des compositions de caoutchouc pour application aux pneumatiques pour véhicules automobiles font également l'objet de l'invention. Ces compositions de caoutchouc comprennent au moins un copolymère diénique thermoplastique à blocs obtenu par le procédé de synthèse selon l'invention. Ce copolymère à blocs est alors plus particulièrement constitué d'au moins un bloc élastomère choisi parmi un polybutadiène ou un copolymère de butadiène. Un tel copolymère est préférentiellement un copolymère butadiène-styrène, et en particulier ceux ayant une teneur en styrène d'au moins 5% en poids, particulièrement d'au moins 20% en poids, et d'au plus 50% en poids, particulièrement d'au plus 40% en poids.

Ce copolymère à blocs peut être utilisé en coupage avec au moins un ou plusieurs élastomères conventionnellement utilisés dans les compositions de caoutchouc pour pneumatiques et choisis parmi le caoutchouc naturel, les élastomères diéniques synthétiques, éventuellement couplés et/ou étoilés et/ou encore partiellement ou entièrement fonctionnalisés, les élastomères synthétiques autres que diéniques, voire des polymères autres que des élastomères.

Ces compositions peuvent en outre comprendre un ou plusieurs additifs usuellement présents dans les compositions de caoutchouc notamment destinées aux pneumatiques pour véhicules automobiles. A titres d'additifs usuels, on peut citer par exemple les charges renforçantes choisies parmi les noirs de carbone et les autres charges renforçantes, organiques et inorganiques de type siliceux notamment la silice, ainsi que les mélanges de ces charges, les agents de liaison gomme/charge, les charges non renforçantes, les agents de mise en œuvre, les stabilisants, les plastifiants, les pigments, les anti-oxydants, les agents anti-fatigue, les cires anti-ozonantes, les promoteurs d'adhésion, les résines renforçantes, les résines plastifiantes, les systèmes de réticulation à base soit de soufre et/ou de peroxyde et/ou de bismaléimides, les activateurs de réticulation comprenant du monoxyde de zinc et de l'acide stéarique, les dérivés guanidiques, les huiles d'extension, les agents de recouvrement de la silice.

Les caractéristiques précitées de la présente invention, ainsi que d'autres, seront mieux comprises à la lecture de la description suivante de plusieurs exemples de réalisation de l'invention, donnés à titre illustratif et non limitatif.

### Exemples de réalisation de l'invention

### Mesures utilisées dans les exemples

Les élastomères sont caractérisés comme indiqué ci-après.

### Chromatographie d'exclusion stérique

On utilise la chromatographie d'exclusion stérique ou SEC (Size Exclusion Chromatography). La SEC permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité ou polydispersité (Ip = Mw/Mn) calculé via un étalonnage dit de MOORE.

Préparation du polymère: Il n'y a pas de traitement particulier de l'échantillon de polymère avant analyse. Celui-ci est simplement solubilisé, dans du (tétrahydrofurane + 1 %vol. d'eau distillée), à une concentration d'environ 1 g/l. Puis la solution est filtrée sur filtre de porosité 0,45µm avant injection.

Analyse SEC: L'appareillage utilisé est un chromatographe « WATERS alliance ». Le solvant d'élution est du tétrahydrofurane. Le débit est de 0,7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 µl. Le détecteur est un réfractomètre différentiel « WATERS 2410 » et le logiciel d'exploitation des données chromatographiques est le système « WATERS EMPOWER».

Les masses molaires moyennes calculées sont relatives à une courbe d'étalonnage réalisée à partir de polystyrènes étalons commerciaux « PSS READY CAL-KIT ».

### Spectroscopie de résonance magnétique nucléaire

Les déterminations des taux des différentes unités monomères et de leurs microstructures au sein du copolymère sont réalisées par une analyse RMN. Les spectres sont acquis sur un spectromètre 500 MHz BRUKER équipé d'une sonde " Broad Band " BBIz-grad 5 mm. L'expérience RMN ¹H quantitative, utilise une séquence simple impulsion 30° et un délai de répétition de 5 secondes entre chaque acquisition. Les échantillons sont solubilisés dans le CDCl₃.

### Exemple 1 :

### Synthèse d'un polymère thermoplastique triblocs poly(α-méthylstyrène) - polybutadiène - poly(α-méthylstyrène)

### 1^{ère} étape : Polymérisation du butadiène

Dans une bouteille Steinie, on introduit 80mL de méthylcyclohexane préalablement barboté à l'azote pendant 10 minutes. On introduit ensuite 15mL de butadiène (soit 9,6g, 0,178mol). Les impuretés présentes dans le milieu réactionnel sont neutralisées par une solution de n-BuLi à 0,1mol/L. La réaction est ensuite amorcée par ajout de 2,74.10⁻⁴ mol d'amorceur difonctionnel tel que le 1,3-diisopropylbenzène dilithium à 0,48mol/L. La polymérisation est réalisée à 60°C pendant 45 minutes pour atteindre 100% de conversion en butadiène.

### 2^{ème} étape : Polymérisation de l'α-méthylstyrène

L'a-méthylstyrène est purifié sur Al₂O₃. Avant utilisation, 1%v/v de THF est introduit dans la solution d'a-méthylstyrène et les impuretés restantes sont neutralisées par du n-BuLi à 0,1mol/L. Un virage au jaune-orange confirme la neutralisation des impuretés. 6,85g d'a-méthylstyrène (0,058mol) de la solution purifiée sont ajoutés à la solution de polybutadiènyl dilithium à 25°C pendant 2h. 12mL de THF distillé sont ensuite ajoutés au mélange réactionnel, le milieu réactionnel est refroidi à -25°C et la réaction est laissée sous agitation pendant 24h. Un taux de conversion de 83% en α-méthylstyrène est atteint.

### Terminaison :

La polymérisation est stoppée avec du méthanol et on ajoute 0,5 parties pour cent parties d'élastomères (pce) d'une solution d'anti-oxydants de 4,4'-méthylène-bis-2,6-tert-butylphénol et de N-(1,3-diméthylbutyl)-N'-phényl-p-phénylènediamine (80%/20%). Le polymère est séché par étuvage sous vide (200 torr) à 60 °C pendant 48h.

### Analyse :

Le copolymère à blocs est analysé en spectroscopie RMN et chromatographie d'exclusion stérique. Le copolymère à blocs possède une masse molaire moyenne totale de Mn = 84000 g/mol et une polydispersité Ip = 1,19 (déterminé par chromatographie d'exclusion stérique). Le copolymère à blocs est constitué de 34,6% massique d'a-méthylstyrène (déterminé par spectroscopie RMN).

### Exemple 2 :

### Synthèse d'un polymère thermoplastique triblocs poly(α-méthylstyrène) - polybutadiène - poly(α-méthylstyrène)

### 1^{ère} étape : Polymérisation du butadiène

Dans un réacteur de 10L, on introduit 4340 mL de méthylcyclohexane préalablement barboté à l'azote pendant 10 minutes. On introduit ensuite 803 mL de butadiène (522 g, 9,67mol). Les impuretés présentes dans le milieu réactionnel sont neutralisées par une solution de n-BuLi à 0,1mol/L. La réaction est ensuite amorcée par ajout de 11588.10⁻⁶ mol d'amorceur difonctionnel tel que le 1,3-diisopropylbenzène dilithium à 0,48 mol/L. La polymérisation est réalisée à 60°C pendant 45 minutes pour atteindre 100% de conversion en butadiène.

### 2^{ème} étape : Polymérisation de l' α-méthylstyrène

L' α-méthylstyrène est purifié sur Al₂O₃. Avant utilisation, 1%v/v de THF est introduit dans la solution d' α-méthylstyrène et les impuretés restantes sont neutralisées par du n-BuLi à 0,1mol/L. Un virage au jaune-orange confirme la neutralisation des impuretés. 376g d' α-méthylstyrène (3,18 mol) de la solution purifiée sont ajoutés à la solution de polybutadiènyl dilithium à 25°C pendant 2h. 781 mL de THF distillé sont ensuite ajoutés au mélange réactionnel puis le milieu réactionnel est refroidi à -25°C et la réaction est laissée 24h. Un **taux de conversion de 93% en α-méthylstyrène** est atteint.

### Terminaison :

La polymérisation est stoppée avec du méthanol et on ajoute 0,5 parties pour cent parties d'élastomères (pce) d'une solution d'anti-oxydants de 4,4'-méthylène-bis-2,6-tert-butylphénol et de N-(1,3-diméthylbutyl)-N'-phényl-p-phénylènediamine (80%/20%). Le polymère est séché par étuvage sous vide (200 torr) à 60 °C pendant 48h.

### Analyse :

Le copolymère à blocs est analysé en spectroscopie RMN et chromatographie d'exclusion stérique. Le copolymère à blocs possède une masse molaire moyenne totale de Mn = 77500 g/mol et une polydispersité Ip = 1,13 (déterminé par chromatographie d'exclusion stérique). Le copolymère à blocs est constitué de 39,3% massique d' α-méthylstyrène (déterminé par spectroscopie RMN).

## Revendications

1. Procédé de synthèse d'un élastomère thermoplastique constitué d'un bloc polydiène et d'au moins deux blocs homopoly(α-méthylstyrène), **caractérisé en ce qu'**il comprend les étapes suivantes:
1. la polymérisation d'au moins un monomère diénique dans un milieu réactionnel de départ comprenant un initiateur de polymérisation anionique polyfonctionnel et un solvant apolaire aprotique;
2. la polymérisation de l'a-méthylstyrène sur la chaîne polydiénique vivante obtenue à l'étape précédente comprenant:
a. à l'issue de la polymérisation de l'étape 1., le maintien à une température positive, inférieure à la température plafond de la polymérisation de l'a-méthylstyrène, du milieu réactionnel contenant l'élastomère diénique vivant obtenu précédemment et de l'a-méthylstyrène;
b. le refroidissement du milieu réactionnel obtenu à l'issue de l'étape précédente a., à une température inférieure à 0°C;
c. simultanément, successivement ou préalablement à l'étape de refroidissement, l'ajout au milieu réactionnel d'un solvant polaire aprotique purifié avec un rapport volumique du solvant polaire au solvant apolaire inférieur à 1; et
d. la propagation de la polymérisation de l'a-méthylstyrène sur la chaîne polydiénique vivante;
3. la terminaison de la polymérisation et la récupération du polymère thermoplastique.

2. Procédé selon la revendication 1, **caractérisé en ce que** le monomère diénique est le butadiène.

3. Procédé selon la revendication 1 ou 2, **caractérisé en ce que**, lors de l'étape 1, le monomère diénique est copolymérisé avec un autre monomère, de préférence un monomère vinylaromatique.

4. Procédé selon la revendication 3, **caractérisé en ce que** le monomère vinylaromatique est le styrène.

5. Procédé selon l'une quelconque des revendications 1 à 4, **caractérisé en ce que** l'initiateur de polymérisation anionique est difonctionnel

6. Procédé selon la revendication 5, **caractérisé en ce que** l'initiateur de polymérisation anionique est le 1,3-diisopropylbenzène dilithium.

7. Procédé selon l'une quelconque des revendications 1 à 6, **caractérisé en ce que** le monomère α-méthylstyrène purifié est ajouté au milieu réactionnel à l'issue de la polymérisation d'au moins un monomère diénique de l'étape 1.

8. Procédé selon l'une quelconque des revendications 1 à 7, **caractérisé en ce que**, à l'étape 2.a., le milieu réactionnel comprenant le polydiène vivant est maintenu à température ambiante en présence de l'α-méthylstyrène.

9. Procédé selon l'une quelconque des revendications 1 à 8, **caractérisé en ce que** le refroidissement de l'étape 2.b. est réalisé à une température allant de -10°C à -40°C.

10. Procédé selon l'une quelconque des revendications 1 à 9, **caractérisé en ce que** le solvant polaire aprotique est choisi parmi les thioéther, les éthers, notamment les éthers cycliques.

11. Procédé selon l'une quelconque des revendications 1 à 10, **caractérisé en ce que** le rapport volumique du solvant polaire au solvant apolaire inférieur à 1/3.

## Patentansprüche

1. Verfahren zur Synthese eines thermoplastischen Elastomers, das aus einem Polydien-Block und mindestens zwei Homopoly(α-methylstyrol)-Blöcken besteht, **dadurch gekennzeichnet, dass** es die folgenden Schritte umfasst:
1. Polymerisation von mindestens einem Dienmonomer in einem Ausgangsreaktionsmedium, das einen polyfunktionellen anionischen Polymerisationsinitiator und ein unpolares aprotisches Lösungsmittel umfasst;
2. Polymerisation von α-Methylstyrol an der aus dem vorhergehenden Schritt erhaltenen lebenden Polydienkette, bei der man:
a. am Ende der Polymerisation von Schritt 1 das Reaktionsmedium, das das zuvor erhaltene lebende Dienelastomer und α-Methylstyrol enthält, bei einer positiven Temperatur, die unterhalb der Ceiling-Temperatur der Polymerisation von α-Methylstyrol liegt, hält;
b. das am Ende des vorhergehenden Schritts a. erhaltene Reaktionsmedium auf eine Temperatur unter 0 °C abkühlt;
c. gleichzeitig mit, nach oder vor dem Abkühlschritt das Reaktionsmedium mit einem gereinigten polaren aprotischen Lösungsmittel mit einem Volumenverhältnis von polarem Lösungsmittels zu unpolarem Lösungsmittel von weniger als 1 versetzt; und
d. die Polymerisation von α-Methylstyrol an der lebenden Polydienkette propagiert;
3. Beendigung der Polymerisation und Gewinnung des thermoplastischen Polymers.

2. Verfahren nach Anspruch 1, **dadurch gekennzeichnet, dass** es sich bei dem Dienmonomer um Butadien handelt.

3. Verfahren nach Anspruch 1 oder 2, **dadurch gekennzeichnet, dass** das Dienmonomer in Schritt 1 mit einem weiteren Monomoer, vorzugsweise einem vinylaromatischen Monomer, copolymerisiert wird.

4. Verfahren nach Anspruch 3, **dadurch gekennzeichnet, dass** es sich bei dem vinylaromatischen Monomer um Styrol handelt.

5. Verfahren nach einem der Ansprüche 1 bis 4, **dadurch gekennzeichnet, dass** der anionische Polymerisationsinitiator difunktionell ist.

6. Verfahren nach Anspruch 5, **dadurch gekennzeichnet, dass** es sich bei dem anionischen Polymerisationsinitiator um 1,3-Diisopropylbenzoldilithium handelt.

7. Verfahren nach einem der Ansprüche 1 bis 6, **dadurch gekennzeichnet, dass** das gereinigte α-Methylstyrol-Monomer dem Reaktionsmedium am Ende der Polymerisation von mindestens einem Dienmonomer von Schritt 1 zugegeben wird.

8. Verfahren nach einem der Ansprüche 1 bis 7, **dadurch gekennzeichnet, dass** das das lebende Polydien umfassende Reaktionsmedium in Schritt 2.a. in Gegenwart von α-Methylstyrol bei Umgebungstemperatur gehalten wird.

9. Verfahren nach einem der Ansprüche 1 bis 8, **dadurch gekennzeichnet, dass** das Abkühlen von Schritt 2.b. bei einer Temperatur im Bereich von -10 °C bis -40 °C durchgeführt wird.

10. Verfahren nach einem der Ansprüche 1 bis 9, **dadurch gekennzeichnet, dass** das aprotische polare Lösungsmittel aus Thioethern und Ethern, insbesondere cyclischen Ethern, ausgewählt ist.

11. Verfahren nach einem der Ansprüche 1 bis 10, **dadurch gekennzeichnet, dass** das Volumenverhältnis von polarem Lösungsmittel zu unpolarem Lösungsmittel weniger als 1/3 beträgt.

## Claims

1. Method for synthesizing a thermoplastic elastomer consisting of a polydiene block and at least two homopoly(α-methylstyrene) blocks, **characterized in that** it comprises the following steps:
1. of polymerizing at least one diene monomer in a starting reaction medium comprising a polyfunctional anionic polymerization initiator and an aprotic non-polar solvent;
2. of polymerizing α-methylstyrene to the living polydiene chain obtained in the preceding step comprising:
a. at the end of the polymerization of step 1., maintaining the reaction medium containing the living diene elastomer obtained previously and α-methylstyrene at a positive temperature, below the ceiling temperature for the polymerization of α-methylstyrene;
b. cooling the reaction medium obtained at the end of the preceding step a., to a temperature below 0°C;
c. simultaneously, successively or prior to the cooling step, adding a purified aprotic polar solvent to the reaction medium with a volume ratio of the polar solvent to the non-polar solvent of less than 1; and
d. propagating the polymerization of α-methylstyrene to the living polydiene chain;
3. of terminating the polymerization and recovering the thermoplastic polymer.

2. Method according to Claim 1, **characterized in that** the diene monomer is butadiene.

3. Method according to Claim 1 or 2, **characterized in that**, during step 1, the diene monomer is copolymerized with another monomer, preferably a vinyl aromatic monomer.

4. Method according to Claim 3, **characterized in that** the vinyl aromatic monomer is styrene.

5. Method according to any one of Claim 1 to 4, **characterized in that** the anionic polymerization initiator is bifunctional.

6. Method according to Claim 5, **characterized in that** the anionic polymerization initiator is 1,3-diisopropylbenzenedilithium.

7. Method according to any one of Claims 1 to 6, **characterized in that** the purified α-methylstyrene monomer is added to the reaction medium at the end of the polymerization of at least one diene monomer of step 1.

8. Method according to any one of Claims 1 to 7, **characterized in that**, in step 2.a., the reaction medium comprising the living polydiene is maintained at ambient temperature in the presence of α-methylstyrene.

9. Method according to any one of Claims 1 to 8, **characterized in that** the cooling of step 2.b. is carried out at a temperature ranging from -10°C to -40°C.

10. Method according to any one of Claims 1 to 9, **characterized in that** the aprotic polar solvent is selected from thioethers and ethers, in particular cyclic ethers.

11. Method according to any one of Claims 1 to 10, **characterized in that** the volume ratio of the polar solvent to the non-polar solvent is less than 1/3.
